# EUROPEAN PATENT SPECIFICATION

(11) **EP 3 561 572 B1**
(45) Date of publication and mention of the grant of the patent: **20.01.2021**
(21) Application number: 18756961.1
(22) Date of filing: 26.02.2018
(51) Int. Cl.: G02B 27/01

(54) **VIRTUAL REALITY HEAD-MOUNTED APPARATUS**
KOPFMONTIERTE VORRICHTUNG FÜR VIRTUELLE REALITÄT
APPAREIL DE RÉALITÉ VIRTUELLE MONTÉ SUR LA TÊTE

(30) Priority: 27.02.2017 CN 201710108673
(43) Date of publication of application: 30.10.2019
(73) Proprietor: Advanced New Technologies Co., Ltd., George Town, Grand Cayman KY1-9008 (KY)
(72) Inventor: ZHANG, Hong, Hangzhou Zhejiang 311121 (CN)
(74) Representative: Branderhorst, Matthijs Pieter Arie
(86) International application number: PCT/CN2018/077284
(87) International publication number: WO 2018/153370

(56) References cited:
- WO-A1-2017/026371
- WO-A2-2016/209671
- CN-A- 105 607 261
- CN-A- 105 954 877
- CN-A- 106 932 905
- CN-U- 204 229 049
- CN-U- 205 608 292
- CN-U- 205 643 871
- CN-U- 205 809 421
- CN-U- 205 958 846
- CN-U- 206 649 212
- US-A1- 2016 212 879
- US-A1- 2016 381 832

## Description

### TECHNICAL FIELD

This application relates to the technical field of virtual reality, and in particular, to a virtual reality head-mounted apparatus.

### BACKGROUND

Virtual reality (VR) technology is a technology that comprehensively utilizes a computer graphics system and various control interfaces to generate an interactive three-dimensional interaction environment on a computer to provide users with immersive experience. In related art, a user may wear a VR head-mounted apparatus, such as VR glasses, a VR helmet, or another VR apparatus, to obtain corresponding virtual reality experience.

The VR apparatus generates a large amount of heat during the operating process. If the heat cannot be dissipated in time, it will affect the user experience of a user wearing the VR apparatus, and also cause overheat on a VR playing component in the VR apparatus, which may affect its normal operation, even normal playing of VR content. The patent application publication US 2016/212879 A1 discloses a virtual reality head-mounted apparatus comprising an apparatus body, at least one heat-generating element and curved thermal tunnels. Chinese publication CN 205 958 846 U discloses a virtual reality head-mounted apparatus comprising an apparatus body, at least one heat-generating element and at least one heat dissipating channel pipe having a non-straight-line structure. The international application publication WO 2016/209671 A2 discloses a virtual reality head-mounted apparatus comprising an apparatus body, at least one heat-generating element and at least one heat dissipating channel having a non-straight-line structure.

### SUMMARY

In view of these limitations, this application provides a VR head-mounted apparatus, which can improve the heat dissipation performance of the VR head-mounted apparatus, and also prevent external light from entering, thus ensuring that the VR head-mounted apparatus provides immersive VR experience for a user.

To achieve the foregoing objective, this application provides the following technical solutions.

According to a first aspect of this application, a VR head-mounted apparatus is provided, including all the features recited in claim 1. A VR head-mounted apparatus including the features recited in claim 6 is also provided. Additional embodiments are defined in the dependent claims.

As can be seen from the above technical solutions, in this application, by providing a heat dissipating channel on an apparatus body of the VR head-mounted apparatus, heat dissipation or auxiliary heat dissipation can be performed on a heat-generating element or an electronic device in the apparatus body. That not only prevents normal playing of VR content from being affected by overheating, but also reduces the weight of the VR head-mounted apparatus to enhance the wearing experience of a user. Meanwhile, since the heat dissipating channel has a non-straight-line structure, external light cannot enter the interior of the apparatus body through the heat dissipating channel (i.e., preventing light leakage), thus immersive VR experience created by the VR head-mounted apparatus is not adversely affected.

### BRIEF DESCRIPTION OF THE DRAWINGS

FIG. 1 is a 3-D structural diagram of a VR helmet provided by an exemplary embodiment of this application.
FIG. 2 is a sectional view of a direction A-A' of the VR helmet shown in FIG. 1.
FIG. 3 is a sectional view of a direction B-B' of the VR helmet shown in FIG. 1.
FIG. 4 is a cross-sectional structural diagram of a heat dissipating channel provided by an exemplary embodiment of this application.
FIG. 5 is a structural diagram of a VR helmet in an assembly state provided by an exemplary embodiment of this application.
FIG. 6 is a structural diagram of a VR helmet in an assembled state provided by an exemplary embodiment of this application.
FIG. 7 is a side cross-sectional view of a VR helmet provided by an exemplary embodiment of this application.
FIG. 8 is a structural diagram of a VR helmet, observed from a wearer's direction, provided by an exemplary embodiment of this application.

### DETAILED DESCRIPTION OF THE INVENTION

In order to further explain this application, the following embodiments are provided, using a VR helmet as an example, to introduce the related structure of a VR head-mounted apparatus of this application.

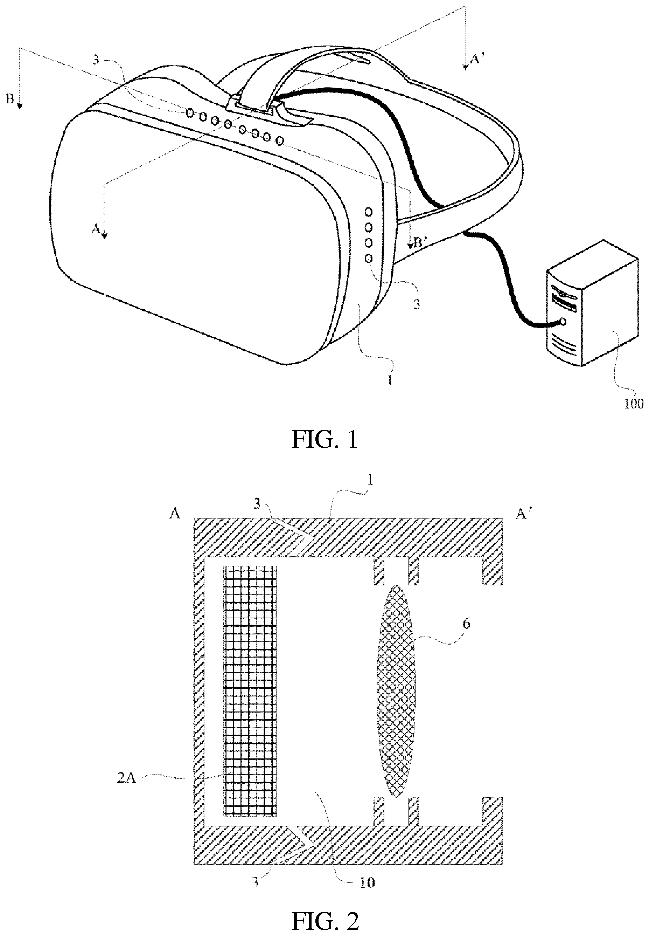

FIG. 1 is a 3-D structural diagram of a VR helmet provided by an exemplary embodiment of this application. As shown in FIG. 1, the VR helmet of this application may be a split-style VR head-mounted apparatus paired with a host 100 (such as a PC host, a game console, or another external apparatus), and the host 100 renders VR display content. Correspondingly, referring to the A-A' cross-sectional view shown in FIG. 2, the apparatus body 1 of the VR helmet may include a corresponding VR display component 2A paired with the host 100 to display the VR content. Similarly, the VR helmet in this embodiment may also be an integrated-style VR head-mounted apparatus. That is, the VR helmet may be able to independently play VR content without resorting to an external apparatus, and may independently display VR content through the VR display component 2A in the apparatus body 1. Certainly, for the foregoing split-style VR head-mounted apparatus paired with the host 100 and the integrated-style VR head-mounted apparatus, the VR display component 2A in the VR helmet has certain structural and functional differences, which will not be discussed in details herein.

As shown in FIG. 2, the apparatus body 1 of the VR helmet includes an installation space 10, and the foregoing VR display component 2A is installed in the installation space 10. The VR display component 2A may generate a large amount of heat due to continuous operation, which not only may cause the VR helmet to heat up at any time and affect the wearing comfort of a user, but also may affect normal processing or display functions as a result of overheating, or even cause a delay in VR playing, etc.

Therefore, the apparatus body 1 of the VR apparatus of this application may further include a plurality of heat dissipating channels 3 as shown in FIG. 1 and FIG. 2. Two ends of the heat dissipating channel 3 are in connection with the installation space 10 and an exterior of the apparatus body 1, respectively. Heat dissipation or auxiliary heat dissipation can be performed on the VR display component 2A installed in the installation space 10 to help reduce the temperature of the VR display component 2A. For example, the heat dissipating channel 3 may be provided in at least one of a top, a bottom, and a side of the apparatus body 1.

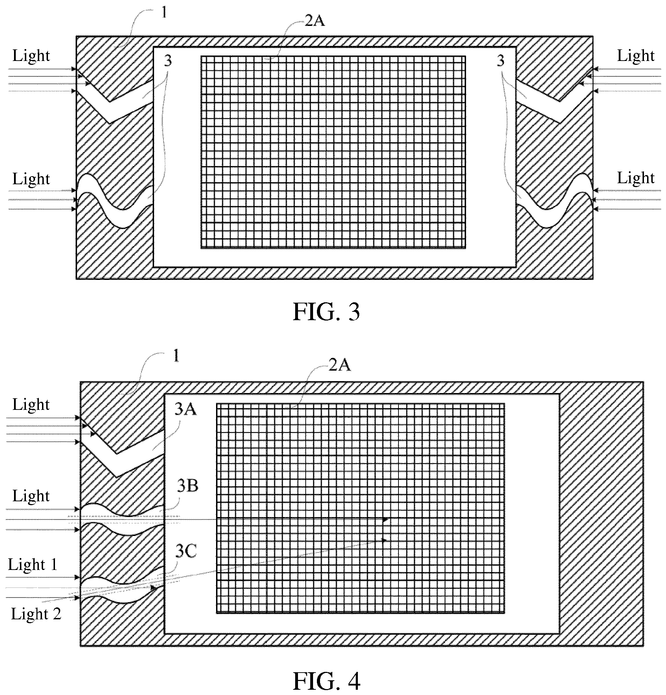

The heat dissipating channel 3 may have a non-straight-line structure to prevent external light from entering the interior of the apparatus body 1 through the heat dissipating channel 3. For example, FIG. 3 is a sectional view of the VR helmet of FIG. 1 in a direction B-B'. Using the heat dissipating channel 3 formed on the side of the apparatus body 1 as an example, by setting the heat dissipating channel 3 to a shape such as a polyline or a curve, external light can be prevented from entering the interior of the apparatus body 1 through the heat dissipating channel 3 (especially entering between the VR display component 2A and an eye of a user, thereby interfering with the user's normal viewing of VR display content). A "light leakage" issue of the VR helmet is prevented, and the immersive application experience created by the VR helmet won't be adversely affected by the leaked light.

It should be pointed out that the "non-straight-line structure" should be understood as: there is no straight-line pathway inside the heat dissipating channel 3 to allow light to propagate through. It does not merely mean that the heat dissipating channel 3, as a whole, is not a straight line. For example, as shown in FIG. 4, for the channel 3A at the top, since a straight pathway for light propagation cannot be formed between its top and its bottom, external light cannot go through the heat dissipating channel 3A, and is prevented from entering the interior of the VR helmet. This heat dissipating channel may be used as a heat dissipating channel 3 in this application. For the channel 3B, in the middle, there is a horizontal straight pathway between its top and its bottom, so that external light can go through the pathway in a horizontal direction and then enter the interior of the VR helmet. This heat dissipating channel may not be used as a heat dissipating channel 3 in this application. For the heat dissipating channel 3C at the bottom, although external light 1 can be prevented from entering the interior of the VR helmet in the horizontal direction, there is an oblique straight pathway between its top and its bottom, so that the external light 2 can go through the pathway obliquely and enter the interior of the VR helmet (e.g., between the VR display component 2A and an eye of a user). This heat dissipating channel may not be used as a heat dissipating channel 3 in this application.

In addition, since the interior of the heat dissipating channel 3 is empty, i.e., material inside the heat dissipating channel 3 is removed, the heat dissipating channel 3 can reduce the weight of the VR helmet and improve the wearing comfort of the user while providing a heat dissipation function.

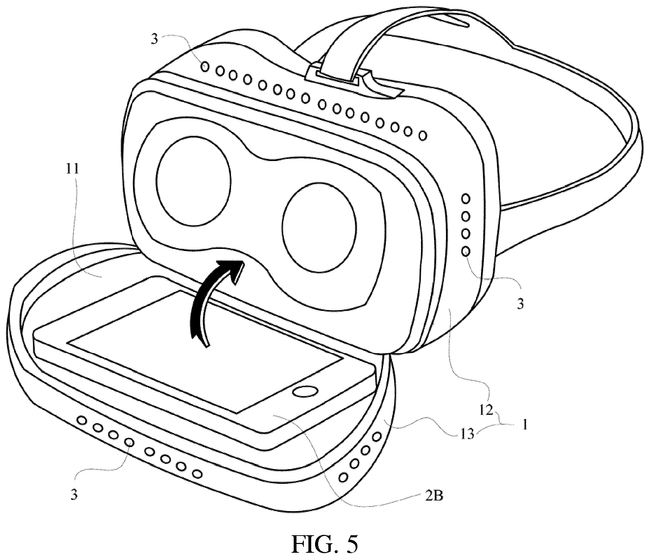

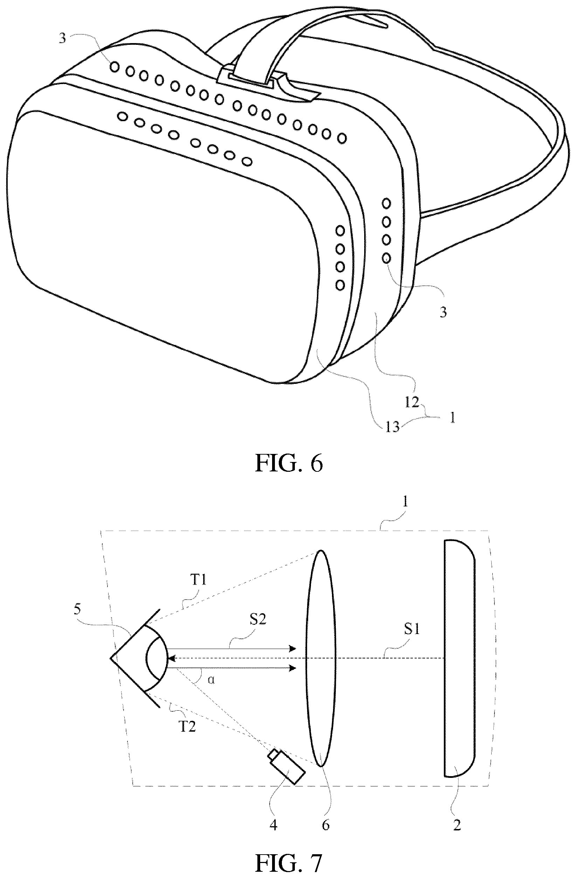

FIG. 5 is a structural diagram of a VR helmet in an assembly state provided by an exemplary embodiment of this application. As shown in FIG. 5, the VR helmet may be a split-style VR head-mounted apparatus. For example, the apparatus body 1 of the VR helmet may include at least one accommodating space 11 for holding a mobile phone 2B that plays VR display content (or a tablet or another electronic device, especially a mobile device). In an embodiment, as shown in FIG. 5, the apparatus body 1 may further include a main body 12 and a cover 13 on a side of the main body 12, such that the foregoing accommodating space 11 is formed between the main body 12 and the cover 13 to hold the mobile phone 2B. Further, by placing the mobile phone 2B in the accommodating space 11 and closing the cover 13, the VR helmet can be switched to an assembled state, as shown in FIG. 6. By using a processor or a graphics card chip, etc. for rendering, and using a screen component for content displaying, the mobile phone 2B may achieve a VR playing function of the VR helmet. Certainly, in addition to the embodiment shown in FIG. 5, the VR helmet may further include other forms of accommodating space 11, which are not limited in this application.

When the mobile phone 2B achieves the VR playing function, the processor, the graphics card chip, etc. may generate a large amount of heat due to continuous operation, which not only may cause the VR helmet to heat up at any time and affect the wearing comfort of a user, but also may cause overheat on the processor, the graphic card chip, etc. and affect their normal computing capabilities, even cause a delay in VR playing, etc.

Therefore, the apparatus body 1 of the VR apparatus of this application includes a plurality of heat dissipating channels 3 as shown in FIG. 5 and FIG. 6. Two ends of the heat dissipating channel 3 are in connection with the accommodating space 11 and the exterior of the apparatus body 1 respectively. Heat dissipation or auxiliary heat dissipation can be performed on the mobile phone 2B placed in the accommodating space 11 to help reduce the temperature of the mobile phone 2B. For example, for the foregoing mobile phone 2B, the heat dissipating channel 3 may be provided in at least one of a top, a bottom, and a side of the apparatus body 1 (particularly, the main body 12 or the cover 13). The position of the heat dissipating channel 3 can be adapted to the heat-generating positions of the electronic device disposed in the accommodating space 11. For example, when the accommodating space 11 is configured to hold a mobile phone 2B, more specific heat-generating positions are usually located in the processor or screen of the mobile phone 2B. Therefore, the heat dissipating channel 3 can be disposed on the apparatus body 1 corresponding to the heat-generating positions to improve the heat dissipation efficiency of the mobile phone 2B.

Similar to the embodiments shown in FIG. 1 to FIG. 4, the heat dissipating channel 3 in the embodiment shown in FIG. 5 and FIG. 6 may also have a non-straight-line structure to prevent external light from entering the interior of the apparatus body 1 through the heat dissipating channel 3. So embodiments shown in FIG. 2 to FIG. 4 may be referred to for a specific structure of the heat dissipating channel 3 in the embodiments shown in FIG. 5 and FIG. 6, which will not be repeated herein. Meanwhile, since the interior of the heat dissipating channel 3 is empty, that is, material in the heat dissipating channel 3 is removed, the heat dissipating channel 3 can reduce the weight of the VR helmet and improve the wearing comfort of the user while providing a heat dissipation function.

In the foregoing technical solution of this application, the VR helmet (including various split-style VR head-mounted apparatuses or integrated-style VR head-mounted apparatuses described above) may further include the following structures. As shown in FIG. 7, the apparatus body 1 of the VR helmet may further include: a camera 4, the camera 4 being provided in the apparatus body 1, a lens of the camera 4 facing an eye 5 of a user wearing the VR head-mounted apparatus, so as to acquire an image of the eye of the user. The camera 4 may be an RGB (Red-Green-Blue) camera, which acquires an RGB image of the eye 5 of the user to perform eye pattern recognition on the user. Alternatively, the camera 4 may be an IR (Infrared Radiation) camera, which acquires an infrared image of the eye 5 of the user for eye tracking, iris recognition, etc. on the user. Additionally, the camera 4 may also be an RGB-IR camera, which may simultaneously acquire both an RGB image and an IR image. That is, only one camera 4 is needed to acquire the RGB image and the IR image, and it is unnecessary to separately install an RGB camera and an IR camera, which not only reduces interior space occupation of the VR helmet, but also allows the single camera 4 to be adjusted to more optimized position and orientation within limited interior space. The assembly of the camera 4 will be described in details below.

As shown in FIG. 7, the apparatus body 1 may include a convex lens 6. The convex lens 6 is located between a user (FIG. 7 shows an eye 5 of the user) and a VR playing component 2 (e.g., the VR display component 2A in the embodiment shown in FIG. 2, or the mobile phone 2B in the embodiment shown in FIG. 5) in the apparatus body 1. VR display content played by the VR playing component 2 may, in a form of visible light S1, go through the convex lens 6 and propagate to the eye 5 of the user. The eye 5 of the user may receive the visible light S 1 to view of the VR display content.

Then, to avoid blocking the VR display content played by the VR playing component 2, that is, to avoid blocking the propagation of the visible light S 1, the camera 4 needs to be placed, to the fullest extent possible, away from a visible area of the convex lens 6 with respect to the eye 5 of the user (e.g., the visible area may be indicated by an upper boundary T1 and a lower boundary T2 as shown in FIG. 7). Thus, the camera 4 is usually installed at the top or bottom of the apparatus body 1, such as a bottom position of the apparatus body 1 shown in FIG. 7, and at a side of the convex lens 6 close to the user (i.e., a left side as shown in FIG. 7).

Further, when the camera 4 acquires light S2 (visible light or infrared light) emitted from the eye 5, since the camera 4 needs to be placed away from the foregoing visible area, and the eye 5 of the user may basically maintain in a straight-looking state shown in FIG. 7 while the user wearing the VR helmet, that is, the light S2 is propagated substantially horizontally, the camera 4 necessarily forms an angle α with the light S2. Then, to avoid severe deformation of the acquired image caused by a large angle α, the camera 4 may be disposed in close contact with an edge of the convex lens 6 (in term of at least one of a horizontal distance and a vertical distance). That is, the distance between the camera 4 and the eye 5 (in term of at least one of the horizontal distance and the vertical distance) may be, to the fullest extent possible, extended to minimize the angle α while all other conditions remaining the same.

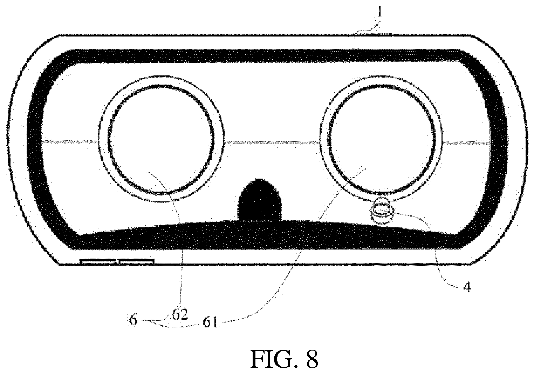

FIG. 8 is a structural diagram of a VR helmet, observed from a wearer's direction, provided by an exemplary embodiment of this application. As shown in FIG. 8, the VR helmet may usually include two convex lenses 6 corresponding to two eyes of the user. Then, in the technical solution of this application, in one embodiment, a single camera 4 may be provided. For example, as shown in FIG. 8, a camera 4 may be provided obliquely below a convex lens 61, and a corresponding position for a convex lens 62 is vacant, so as to perform image acquisition on the right eye of a wearer, thereby achieving the foregoing functions such as eye pattern recognition, eye tracking, and iris recognition. In another embodiment, two cameras 4 may be provided, so that each of the two cameras 4 are in a one-to-one correspondence with the convex lens 61 and the convex lens 62, respectively, and may separately or simultaneously perform image acquisition on the eyes of the wearer, thereby achieving the foregoing functions such as eye pattern recognition, eye tracking, and iris recognition.

In addition, the camera 4 tends to generate a large amount of heat during operation, especially after continuous operating for a long time. For example, in the embodiment shown in FIG. 1 or FIG. 5, when the camera 4 is installed in a preset installation space in the apparatus body 1, the apparatus body 1 may further include at least one heat dissipating channel 3 having a non-straight-line structure, with two ends of the heat dissipating channel 3 in connection with the installation space and the exterior of the apparatus body 1, respectively, to dissipate heat from the camera 4 in the installation space, and to prevent external light from entering the interior of the apparatus body 1 through the heat dissipating channel 3. An installation position of the heat dissipating channel 3 may correspond to an installation position of the camera 4. For example, when the camera 4 is located below the right convex lens 61 as shown in FIG. 8, the heat dissipating channel 3 may be located at a right bottom of the apparatus body 1 corresponding to the installation space of the camera 4. Certainly, the heat dissipating channel 3 may also be disposed at other positions such as the top or the side of the apparatus body 1 according to actual conditions, which is not limited in this application.

It should also be noted that the terms "include", "comprise" and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one......" does not exclude other same elements in the process, method, article or device which include the element.

References will now be made in detail to exemplary embodiments, examples of which are illustrated in the accompanying drawings. The above description refers to the accompanying drawings in which the same numbers in different drawings represent the same or similar elements unless otherwise represented. The implementations set forth in the above description of exemplary embodiments do not represent all implementations consistent with this application. Instead, they are merely examples of apparatuses and methods consistent with aspects related to this application as recited in the appended claims.

The terms used in this application are merely for the purpose of describing specific embodiments, and are not intended to limit this application. The terms "a", "said" and "the" of singular forms used in this application and the appended claims are also intended to include plural forms, unless otherwise specified in the context clearly. It should also be understood that, the term "and/or" used herein indicates and includes any or all possible combinations of one or more associated listed items.

It should be understood that although the terms such as first, second, and third may be used herein to describe various information, such information should not be limited to these terms. These terms are merely used for distinguishing information of the same type from each other. For example, within the scope of this application, first information may also be referred to as second information, and similarly, second information may also be referred to as first information. Depending on the context, the term "if' as used herein may be interpreted as "when ..." or "upon ..." or "in response to determining."

## Claims

1. A virtual reality head-mounted apparatus, comprising: an apparatus body (1) and at least one heat-generating element (2A), (4) being at least one of a virtual reality display component for playing virtual reality display content and a camera for acquiring an image of an eye of a user wearing the virtual reality head-mounted apparatus, wherein the apparatus body comprises at least one installation space (10) and at least one heat dissipating channel (3) having a non-straight-line structure, the heat-generating element is installed in the installation space, and the at least one heat dissipating channel has two ends that are in connection with a region of the installation space between the at least one heat generating component and the eye of a user and an exterior of the apparatus body respectively,
wherein the at least one heat dissipating channel has an empty interior, the two ends of the at least one heat dissipating channel open towards opposing directions, and there is no straight-line pathway inside the heat dissipating channel (3).

2. The apparatus according to claim 1, wherein at least one heat-generating element is a camera provided in the apparatus body, a lens of the camera facing an eye of a user wearing the virtual reality head-mounted apparatus so as to acquire an image of the eye of the user.

3. The apparatus according to claim 2, further comprising:
a convex lens, provided in the apparatus body,
wherein the camera is provided on a side of the convex lens close to the user, and the camera is located outside a visible area of the convex lens with respect to the user.

4. The apparatus according to claim 3, wherein the camera is disposed in close contact with an edge of the convex lens.

5. The apparatus according to claim 2, wherein the camera comprises a red-green-blue and infrared integrated camera.

6. A virtual reality head-mounted apparatus comprising: an apparatus body (1), the apparatus body comprising at least one installation space (10) and at least one heat dissipating channel (3) having a non-straight-line structure, wherein the installation space is configured to hold an electronic device (2A), (4) for playing virtual reality display content, and the at least one heat dissipating channel has two ends that are in connection with a region of the installation space between the electronic device when installed and the eye of a user and an exterior of the apparatus body respectively,
wherein the at least one heat dissipating channel has an empty interior, the two ends of the at least one heat dissipating channel open towards opposing directions, and there is no straight-line pathway inside the heat dissipating channel (3).

## Patentansprüche

1. Kopfmontiertes Gerät für virtuelle Realität, umfassend einen Gerätkörper (1) und mindestens ein wärmeerzeugendes Element (2A), (4) welches mindestens eines von einer Anzeigekomponente für virtuelle Realität zum Abspielen von Anzeigeinhalten virtueller Realität und einer Kamera zum Erfassen eines Bildes eines Auges eines Benutzers ist, welcher das kopfmontierte Gerät für virtuelle Realität trägt, wobei der Gerätkörper mindestens einen Installationsraum (10) und mindestens einen Wärmeableitungskanal (3) umfasst, welcher eine ungeradlinige Struktur aufweist,
wobei das wärmeerzeugende Element in dem Installationsraum installiert ist, und der mindestens eine Wärmeableitungskanal zwei Enden aufweist, welche mit einem Bereich des Installationsraums zwischen der mindestens einen Wärmeerzeugungskomponente und jeweils dem Auge eines Benutzers und einem Äußeren des Gerätkörpers in Verbindung stehen,
wobei der mindestens eine Wärmeableitungskanal ein leeres Inneres aufweist, wobei die beiden Enden des mindestens einen Wärmeableitungskanals sich in entgegengesetzte Richtungen öffnen, und es innerhalb des Wärmeableitungskanals (3) keinen geradlinigen Weg gibt.

2. Gerät nach Anspruch 1, wobei das mindestens eine wärmeerzeugende Element eine Kamera ist, welche in dem Gerätkörper bereitgestellt ist, wobei eine Linse der Kamera einem Auge eines Benutzers zugewandt ist, welcher das kopfmontierte Gerät für virtuelle Realität trägt, um ein Bild des Auges des Benutzers zu erfassen.

3. Gerät nach Anspruch 2, ferner Folgendes umfassend:
eine konvexe Linse, welche in dem Gerätkörper bereitgestellt ist,
wobei die Kamera an einer Seite der konvexen Linse nahe dem Benutzer bereitgestellt ist, und die Kamera außerhalb eines sichtbaren Bereichs der konvexen Linse in Bezug auf den Benutzer befindlich ist.

4. Gerät nach Anspruch 3, wobei die Kamera in engem Kontakt mit einem Rand der konvexen Linse angeordnet ist.

5. Gerät nach Anspruch 2, wobei die Kamera eine integrierte Rot-, Grün-, Blau- und Infrarotkamera umfasst.

6. Kopfmontiertes Gerät für virtuelle Realität, umfassend einen Gerätkörper (1), wobei der Gerätkörper mindestens einen Installationsraum (10) und mindestens einen Wärmeableitungskanal (3) aufweist, welcher eine ungeradlinige Struktur aufweist, wobei der Installationsraum konfiguriert ist, um eine elektronische Vorrichtung (2A), (4) zum Abspielen von Anzeigeinhalten virtueller Realität aufzunehmen, und der mindestens eine Wärmeableitungskanal zwei Enden aufweist, welche mit einem Bereich des Installationsraums zwischen der elektronischen Vorrichtung, wenn diese installiert ist, und jeweils dem Auge des Benutzers und einem Äußeren des Gerätkörpers in Verbindung stehen,
wobei der mindestens eine Wärmeableitungskanal ein leeres Inneres aufweist, wobei die beiden Enden des mindestens einen Wärmeableitungskanals sich in entgegengesetzte Richtungen öffnen, und es innerhalb des Wärmeableitungskanals (3) keinen geradlinigen Weg gibt.

## Revendications

1. Appareil de réalité virtuelle monté sur la tête, comprenant un corps d'appareil (1) et au moins un élément de génération de chaleur (2A), (4) qui est au moins un parmi un composant d'affichage en réalité virtuelle pour lire un contenu d'affichage en réalité virtuelle et une caméra pour acquérir une image d'un œil d'un utilisateur qui est porteur de l'appareil de réalité virtuelle monté sur la tête, dans lequel le corps d'appareil comprend au moins un espace d'installation (10) et au moins un canal de dissipation de chaleur (3) qui comporte une structure non rectiligne,
dans lequel l'élément de génération de chaleur est installé dans l'espace d'installation, et l'au moins un canal de dissipation de chaleur comporte deux extrémités qui sont en connexion avec une région de l'espace d'installation entre l'au moins un composant de génération de chaleur et l'œil d'un utilisateur et un extérieur du corps d'appareil respectivement,
dans lequel l'au moins un canal de dissipation de chaleur comporte un intérieur vide, les deux extrémités de l'au moins un canal de dissipation de chaleur s'ouvrent dans des directions opposées, et il n'y a pas de passage rectiligne à l'intérieur du canal de dissipation de chaleur (3).

2. Appareil selon la revendication 1, dans lequel l'au moins un élément de génération de chaleur est une caméra qui est prévue dans le corps d'appareil, un objectif de la caméra faisant face à un œil d'un utilisateur qui est porteur de l'appareil de réalité virtuelle monté sur la tête de manière à acquérir une image de l'œil de l'utilisateur.

3. Appareil selon la revendication 2, comprenant en outre :
une lentille convexe qui est prévue à l'intérieur du corps d'appareil,
dans lequel la caméra est prévue sur un côté de la lentille convexe qui est proche de l'utilisateur, et la caméra est localisée à l'extérieur d'une zone visible de la lentille convexe par rapport à l'utilisateur.

4. Appareil selon la revendication 3, dans lequel la caméra est disposée en contact serré avec un bord de la lentille convexe.

5. Appareil selon la revendication 2, dans lequel la caméra comprend une caméra intégrée rouge - vert - bleu et infrarouge.

6. Appareil de réalité virtuelle monté sur la tête comprenant un corps d'appareil (1), le corps d'appareil comprenant au moins un espace d'installation (10) et au moins un canal de dissipation de chaleur (3) qui comporte une structure non rectiligne, dans lequel l'espace d'installation est configuré pour contenir un dispositif électronique (2A), (4) pour lire un contenu d'affichage en réalité virtuelle et l'au moins un canal de dissipation de chaleur comporte deux extrémités qui sont en connexion avec une région de l'espace d'installation entre le dispositif électronique lorsqu'il est installé et l'œil d'un utilisateur et un extérieur du corps d'appareil respectivement,
dans lequel l'au moins un canal de dissipation de chaleur comporte un intérieur vide, les deux extrémités de l'au moins un canal de dissipation de chaleur s'ouvrent dans des directions opposées, et il n'y a pas de passage rectiligne à l'intérieur du canal de dissipation de chaleur (3).
